# NEW EUROPEAN PATENT SPECIFICATION

(11) **EP 0 469 673 B2**
(45) Date of publication and mention of the opposition decision: **02.05.2002**
(45) Mention of the grant of the patent: 22.06.1994
(21) Application number: 91201931.2
(22) Date of filing: 23.07.1991
(51) Int. Cl.: B29C 47/06, G02B 6/10

(54) **Process for the production of a continuous object of a thermosetting polymer**
Verfahren zur kontinuierlichen Herstellung eines Gegenstandes aus Duroplast
Procédé pour la manufacture en continu d'un objet en polymère thermodurcissable

(30) Priority: 28.07.1990 NL 9001715
(43) Date of publication of application: 05.02.1992
(73) Proprietor: DSM N.V., 6411 TE Heerlen (NL)
(72) Inventor: Gelissen, Franciscus Wilhelmus Maria, W-5135 Selfkant Havert (DE); Bastiaansen, Cornelis Wilhemus Maria, NL-6224 LH Maastricht (NL)

(56) References cited:
- EP-A- 0 119 490
- EP-A- 0 192 570
- EP-A- 0 254 915
- EP-A- 0 258 839
- FR-A- 2 574 699
- JP-A- 63 274 903
- US-A- 4 161 500
- US-A- 4 876 531
- US-A- 4 937 029

## Description

The invention relates to a process for the production of a continuous object, comprising the extrusion of a continuous thermoplastic sheath through a die and introducing a monomer of a thermosetting polymer into the sheath in the plane of the die during the extrusion of the continuous sheath, the monomer, being a liquid which cannot be shaped to self-supporting objects is polymerized to the thermosetting polymer immediately after the injection and in one continuous run with it.

Such a method is known from JP 63-274903 which describes a process for the production of a continuous length of plastic optical fiber by simultaneously forming a sheath from a thermoplastic resin and a core from a heat-curable resin. For the core material methyl methacrylate was used as the monofunctional monomer.

The aim of the invention is the provide a process wherein the polymerizing core is prevented from shrinking loose from the sheath, which shrinking occurs when the sheath has already solidified and as a rule cannot shrink anymore to compensate the shrinkage of the core.

This aim is achieved according to the features as set out in claim 1.

By the process according to the invention is attained that a tight contact is maintained between the thermosetting core and the sheath because as a rule the sheath shows a strong tendency to shrink upon cooling, which is amply sufficient to compensate the shrink occurring upon polymerization of the monomer. This shrinking of the sheath also prevents the formation of voids, noted as a problem on page 12, lines 6-9, of EP-A-254.915.

The invention also relates to a process for production of a continuous object comprising the extrusion of continuous thermoplastic sheath through a die and introducing a monomer of a thermosetting polymer into the sheath during extrusion of the continuous sheath, the monomer being a liquid which cannot be shaped to a self-supporting object.

Another aim of the invention is to provide a process wherein the maximum allowable polymerization temperature of the monomer is significantly lower than the extrusion temeprature of the sheath.

This aim is achieved according to the features as set out in claim 2.

Another further advantage of the process according to the invention is that the wall thickness of the sheath as well as the space enclosed by the sheath can be chosen within wide limits. Yet another further advantage of the process according to the invention lies in the fact that the monomer is isolated from the ambient air by the sheath. To an important extent this prevents contamination of the monomer with dust particles present in the ambient air and possible undesirable side reactions of the monomer, in particular with the oxygen present in the ambient air, without additional provisions being required.

Melt processing of thermosetting polymers, once they have cured, is not possible. Therefore, manufacture of objects of thermosetting materials as a rule takes place by introducing the corresponding monomer into a mould of the desired shape and then polymerizing it, the resulting object having the shape of the mould. At low temperatures, for instance room temperature, most monomers of thermosetting polymers are liquids, which cannot be shaped to self-supporting objects, so that spinning or extruding of the monomer does not yield continuous objects which can be handled in further treatments. That is why for the continuous manufacture of continuous objects of thermosetting polymers, in marked contrast to the situation for thermoplastic polymers, no economically applicable techniques are known. Patent publication JP-A-61/262707 does describe a controlled manner of gradual polymerization of a polymerizable monomer, yielding a prepolymer with a viscosity that makes it suitable for spinning, followed by spinning of the prepolymer - already possessing some internal cohesion due to the partial polymerization - and subsequent further polymerization. But this process requires very precise control and consequently has low flowthrough rates and it is economically unattractive because of the resulting low production speed.

As thermosetting polymers can be used the thermoset materials known per se, such as for instance epoxy resins, acrylate resins, melamine resins, bismaleimide resins, urethane resins, unsaturated polyester resins and amino- and phenoplasts, provided that the monomer from which the polymer is formed is liquid at the temperature at which the injection into the thermoplastic sheath is effected and at that temperature has such a viscosity that continuous injection at the required flow rate is possible. Moreover, it should be possible so to choose the conditions at which polymerization of the monomer to the thermosetting polymer occurs as to prevent degradation of the sheath, whereby it would lose its function as such.

The thermosetting polymer is obtained from the corresponding monomer through polymerization. For the purpose of the invention, a monomer is understood to be a monomer or oligomer of a thermosetting polymer or a precursor of a thermosetting polymer or a thermosetting prepolymer which already has been subjected to a certain degree of polymerization, or a composition containing one or more of these components. By appropriately choosing the components for the mixture, both the properties of the monomer, such as the viscosity, and those of the finally obtained thermosetting object can be favourably influenced. The monomer may also contain the customary additives, such as for instance fillers, inhibitors, accelerators or combinations of such substances.

The polymerization of a monomer to a thermosetting polymer is known per se. Such polymerization can take place under the effect of heat, UV radiation or electron of gamma radiation. If required or desired, suitable auxiliary agents known per se, such as initiators, accelerators or other known additives that influence the polymerization or combinations of these substances are added. If auxiliary agents are used, they should be added to the monomer before it is injected and in that case it is possible, also depending on the temperature of the monomer, that the polymerization is already more or less advanced when the monomer is injected into the sheath. From case to case it can be easily established by routine experiments in what temperature range, in conjunction with the retention and flow times of the monomer in the storage and injection system used, the monomer has a viscosity that permits continuous injection. When the monomer has been injected, the polymerization or further polymerization takes place within the sheath. To that end, the filled sheath is subjected to a treatment with heat, UV radiation or electron or gamma radiation or a combination thereof. Polymerization under the effect of heat is a relatively slow process, as is known from EP-A-254.915, while the apparatus needed for electron or gamma radiation is very expensive. Preferably therefore use is made of UV radiation, with the radiation intensity and the speed of transport in the manufacture of the filled sheath being so adjusted to each other that the required degree of polymerization has been reached when the filled sheath has passed through the range where it is exposed to the UV radiation. Normally, said conditions can be so adjusted to each other that full polymerization takes place within a few seconds, so that the desired high rate of production can be achieved. In order to promote a rapid polymerization it is advantageous if the sheath absorbs a minimum amount of UV radiation. In general this is the case when the sheath consists of an amorphous material. If a semicrystalline thermoplast is used as sheath material it is advantageous to effectuate the UV radiation before the sheath has substantially crystallized by cooling to below its melting point, since the crystallized material in general is less permeable to UV radiation than the material in non-crystallized condition. In order to obtain a higher temperature resistance it is advantageous to subject the thermosetting object to a heat treatment after the UV radiation.

The monomer is polymerized in the sheath. This is preferably done immediately after the injection or after the monomer filled sheath has been subjected to one or more subsequent treatments prior to polymerization of the monomer. An example of such a subsequent treatment is stretching of the filled sheath, apart from any pre-stretching, causing its sectional area and thereby that of the monomer filling as well to decrease and also resulting in a thermosetting object with a correspondingly smaller sectional area after polymerization. It is possible wind up the liquid monomer filled sheath and subject it later to a polymerization treatment, but it is preferable for all steps in the production process to be performed in one continuous run.

In general, shrinkage occurs upon polymerization of the monomer. If it is desired now to obtain a sheathed thermosetting object as final product, it is preferable to cause the monomer to be polymerized before the sheath solidifies. In this way the polymerizing core is prevented from shrinking loose from the sheath, which shrinking occurs when the sheath has already solidified and as a rule cannot shrink any more to compensate the shrinkage of the core. If on the other hand the sheath has to be removed later to obtain an unsheathed thermosetting object, it is preferable first to cause the sheath to solidify, after which the thermosetting core can shrink loose from the sheath, which very much simplifies the removal of the then substantially loose sheath.

The sheath can be made of all materials from which a continuous sheath can be extruded which is suitable to contain the monomer and can bear the polymerization conditions. If a thermoplastic polymer is used, a melt or a solution of the polymer can thus be extruded. Processing of a melt of a thermoplastic polymer to an object of the desired hollow shape is a known and simple technique and if possible it is utilized by preference. If however the envisaged thermosetting object requires the use of a thermoplastic polymer with a very high molecularweight for the sheath, which type of material is known to possess very poor melt flow properties in general, or the use of a polymer which is subject to thermal degradation already at temperatures below its melting point, then it is advantageous to manufacture the sheath from a solution of the polymer by means of extrusion of the solution, a process known per se, after which the solvent must be extracted later in the process. When the sheath has to be removed in order to obtain a bare continuous thermosetting object, a sheath made of a thermoplastic polymer offers the advantage of being relatively simple to remove, for instance by causing the sheath to dissolve in a solvent for the thermoplastic polymer.

The manufacture of the sheath from a monomer which is polymerizable to a thermosetting polymer encounters the same problems as those for which the present invention aims to provide a solution and therefore will not be directly possible. It is known however, for instance from GB-A-1.057.434, to dissolve a suitable polymer in a monomer in order to bring the viscosity to a level needed for spinning. Although only a very small number of suitable combinations of monomers and polymers dissolvable therein with the desired effect are known yet, said and related processes can be used, if the presence in the anyway substantially thermosetting sheath of a minor quantity of the polymer added for the purpose of viscosity increase is not an objection, in the process according to the invention for extrusion in continuous form of the sheath. The advantages of such a substantially thermosetting sheath over a sheath made from a thermoplastic polymer are the higher melting point, which appears to be very dose to that of the pure thermosetting polymer, and the possibility to make the core and the sheath from at least substantially the same material.

The sheath is extruded in continuous form. For the purpose of the process according to the invention, 'extrusion' is also understood to mean other processes which are suitable for manufacture of hollow objects in continuous form, such as for instance spinning. By a 'sheath in continuous form' is understood in the context of the invention a sheath which is characterized in that the dimension in one direction is very large to virtually unlimited, such as is the case for instance with hollow continuously extruded fibres or filaments of different thicknesses and of different cross section profiles and with tapes. The shape of the extrusion die determines the shape of the sheath and thereby that of the thermosetting object enclosed in it. For instance, for the manufacture of a sheath with a ring-shaped cross section a ring-shaped extrusion die will be used. These known shaping techniques yield objects of sufficient solidity and dimensional stability to be subjected to subsequent treatments. It has appeared that these objects, mostly even at a temperature which is a few degrees above their melting or dissolution temperature, possess sufficient solidity to hold the liquid monomer together, while retaining the desired shape over great lengths, so that they are highly suitable to be used as sheath for the liquid monomer. In these known shaping techniques the filled continuously extruded sheath is transported by means of rolls, guides or belts and finally wound up in very great lengths. During this transport the sheath may be subjected to pre-stretching by choosing a speed of transport which is higher than the speed at which the sheath is manufactured. The resulting constriction which results in reduction of the sectional area of the sheath contributes essentially towards compensation of the shrinkage which occurs upon polymerization of the liquid monomeric core to the thermosetting polymer. The sectional area of the sheath may also be reduced by lowering the flow rate at which the monomer is injected, while on the other hand by raising it and at the same time making use of the elasticity of the sheath, its sectional area can be enlarged, so that by mutual adjustment of the degree of stretching and the flow rate at which the monomer is injected the sectional area of the thermosetting core can be adjusted.

The monomer is injected in liquid form into the sheath during the extrusion of the latter. This injection can be effected via an injection device, for instance in the form of a hollow needle, located within the extrusion die which shapes the sheath. The tip of this device, through which the monomer is injected into the sheath, may be located in the plane of the extrusion die or just beyond it, viewed in the direction of manufacture of the sheath, in which case the injection device protrudes by a certain length, preferably 50 mm, more preferably at most 25 mm, within the freshly extruded sheath. In the first case the monomer injection takes place at the moment the sheath leaves the extrusion die, in the second case the sheath has already travelled a certain distance outside the extrusion die and consequently has already undergone a certain degree of cooling and, possibly, stretching with the attendant decrease in sectional area at the moment the monomer is injected into it. If the cooling and/or stretching should continue before the monomer is injected, the injection device may protrude further beyond the plane of the extrusion die and into the hollow sheath if desired. This can be advantageous for instance if the maximum allowable polymerization temperature of the monomer is significantly lower than the extrusion temperature of the sheath.

The monomer should be liquid at the temperature at which the injection takes place in order to allow such injection. At room temperature most monomers of thermosetting polymers are already liquid and upon elevation of the temperature they are virtually all liquid. However, the temperature also affects the rate at which the polymerization process proceeds. If a temperature elevation is applied in order to improve the flow properties of the monomer, the polymerization will proceed faster too. Care should be taken to avoid that the polymerization proceeds so fast then that the injection becomes impossible as a consequence of the viscosity increase brought about with the progressing polymerization. The polymerization process can be obstructed or delayed by the addition of inhibitors, known in itself. In practice it is easy to determine experimentally, for instance by a differential scanning calorimetry (DSC) measurement, the temperature at which for a certain monomer, whether or not with an inhibitor added to it, the polymerization starts, and the temperature at which the monomer is kept in stock is preferably below this polymerization temperature. The monomer should be processed below the temperature at which it might decompose or boil, but the process according to the invention offers one skilled in the art sufficient possibilities to meet these requirements.

The process according to the invention is advantageous in particular for the manufacture of very long and thin objects, such as fibres of thermosetting polymers, which are impossible or very difficult to manufacture in other ways. Preferably, use is made of an extrusion head for the manufacture of two-component fibres of the centric cover-core (C/C) type. This type of fibre is known in itself, for instance from "Textil-Industrie" 72 (1970), Heft 4, page 253. In the process according to the invention the cover component is then constituted by the sheath and the core component by the liquid polymerizable monomer. This is a very suitable way to manufacture light-transmitting, optical fibres. The diameter of optical fibres is in practice between 0.1 and 20 mm. For use, such fibres are provided with one or more coating layers, which on the one hand is meant for protection and on the other, due to correct choice of the refractive index relative to that of the thermosetting core, should prevent loss of intensity of the light transmitted through the fibre. By means of the process according to the invention now it is possible to manufacture in one run a coated light-transmitting fibre in a virtually unlimited length, in contrast to the known discontinuous process of EP-A-254.915. In some cases the material envisaged for coating of a light-transmitting fibre may not be suitable to be extruded as a continuous coating in the process described in the foregoing. In that case there is advantage in using another material which is suitable for that purpose in the manufacture of the thermosetting light-transmitting fibre. After polymerization of the thermosetting core the sheath is then removed as described above, after which by methods known per se, such as submersion in a solution of the coating material or by wire coating extrusion, using as core the cured light-transmitting fibre freed from its sheath, a coating can be applied. This does make the overall process more complex, but the potential advantages of a high rate of production and continuous process operation are maintained.

Although the process according to the invention is not restricted thereto, it is useful to note that polymerizable monomers suitable for use in light-transmitting fibres are known per se, for instance from EP-A-254.915 and from patent publication JP-A-62/297.805, while from US-A-4.826.284 polymers also suitable as coating for light-transmitting fibres are known.

The invention will now be elucidated by means of the following examples, without being restricted thereto. The quantities given in the examples are determined as described below.

The filled hollow fibres in the examples are made with a standard extrusion head for manufacture of two-component fibres of the centric cover-core (C/C) type. The outer diameter of its ring-shaped extrusion die is 2 mm, the inner diameter 0.7 mm. From an extruder, the sheath material is fed to this head as the first (i.e. cover) component, and the liquid monomer as the second (i.e. core) component. The filled fibre is then cooled, stretched if required and wound up.

The starting point of the thermal curing of a polymerizable monomer is determined by means of differential scanning calorimetry (DSC) in a nitrogen atmosphere, using a Perkin-Elmer DSC-2 and applying a heating-up rate of 10°C/minute.

The melt index was determined according to ASTM standard D1238-87.

### Experiment I

To an epoxy acrylate resin (Ebecryl^{R} 600 from Radcure Specialties) 3 wt.% UV initiator (Irgacure^{R} 651 from Ciba-Geigy) is added. By means of DSC the starting point of the thermal curing is found to be 180°C. For an unsaturated polyester resin (Stypol^{R} 408210 from DSM) this starting point is found to be 140°C.

### Example II

By means of the C/C extrusion head a hollow fibre is continuously extruded from a melt of LDPE with a melt index of 4.4 at a temperature of 150°C. The epoxy acrylate resin of Experiment I with a temperature of 60°C is injected into the hollow LDPE fibre to form a core. For curing of the core, the filled LDPE fibre is passed through the radiation plane of a UV radiation device and then wound up. The winding-up rate corresponds to the extrusion rate and amounts to 4m/min. The fibre has an outer diameter of 2.2 mm, the thickness of the LDPE sheath amounts to 0.6 mm.

### Example III

Example II is repeated, on the understanding that the winding-up rate is 4x the extrusion rate. The LDPE fibre thus obtained, filled with the cured epoxy acrylate, has an outer diameter of 1 mm and a sheath thickness of 0.2 mm.

### Example IV

Example II is repeated, on the understanding that the flow rate at which the liquid monomer is injected is increased by a factor 2. The LDPE fibre thus obtained, filled with the cured epoxy acrylate, has an outer diameter of 3.5 mm and a sheath thickness of 0.3 mm.

### Example V

Example II is repeated, on the understanding that the unsaturated polyester resin of Experiment I is used as core material. The injection temperature amounts to 23°C, i.e. below the starting point of the thermal curing determined in Experiment **I**. The LDPE fibre thus obtained, filled with the cured polyester resin, has an outer diameter of 2.4 mm and a sheath thickness of 0.6 mm.

### Example VI

To the Ebecryl^{R}-600 resin of Experiment **I**, instead of Irgacure^{R}, 3 wt% of Darocure^{R} UV-initiator (from Merck) is added. In the same way as in Example II a hollow LDPE fibre is extruded and the Ebecryl^{R} resin is injected into the hollow fibre at two injection temperatures. Various amounts of di-ethyleneglycol-dimethylacrylate (DEGDMA) are added to the resin. The conditions chosen are presented in Table 1. The fibres obtained have an outer diameter of about 2.2 mm and the thermoset core diameter amounts about 1 mm.

**Table 1**

| Sheath polymer | Parts wt. Ebecryl^{R} | Parts wt. DEGDMA | Starting point thermal curing °C | Injection temperature °C |
|---|---|---|---|---|
| LDPE | 1 | 1 | 181 | 20 |
| " | 3 | 1 | 182 | 80 |
| " | 10 | 1 | 184 | 80 |

### Example VII

Example II is repeated, on the understanding that the hollow fibre is extruded from a melt of polyoxymethylene (POM, M25-00 of Celanese) at 180°C and that into the hollow POM fibre a polyethermethane acrylate (PEMA) resin is injected, containing 3 wt.% of Darocure^{R} as a UV-initiator. This procedure is repeated variyng the injection temperature and the amount of DEGDMA added. The conditions chosen are presented in Table 2. The dimensions of fibre and core agree with those of Example VI.

### Example VIII

Example VII is repeated, on the understanding, that the hollow fibre is extruded from molten polymethylmethacrylate (PMMA, HFI-7 of Röhm & Haas) at 240°C. The conditions chosen are presented in Table 2. The dimensions of fibre and core agree with those of Example VI.

**Table 2**

| Sheath polymer | Parts wt. PEMA-resin | Parts wt. DEGDMA | Starting point thermal curing °C | Injection temperature °C |
|---|---|---|---|---|
| POM | 1 | - | 150 | 80 |
| " | 1 | 1 | 151 | 20 |
| " | 3 | 1 | 153 | 80 |
| " | 10 | 1 | 155 | 80 |
| | | | | |
| PMMA | 1 | - | 150 | 20 |
| " | 1 | 1 | 151 | 20 |
| " | 3 | 1 | 153 | 80 |
| " | 10 | 1 | 155 | 80 |

## Claims

1. Process for production of a continuous object, comprising the extrusion of a continuous thermoplastic sheath through a die and introducing a monomer of a thermosetting polymer into the sheath in the plane of the die during the extrusion of the continuous sheath, the monomer, being a liquid which cannot be shaped to self-supporting objects is polymerized to the thermosetting polymer immediately after the injection and in one continuous run with it, **characterized in that** a semicrystalline thermoplastic polymer is used as sheath material and the polymerization is effected by UV-radiation before the sheath has substantially crystallized.

2. Process for production of a continuous object comprising the extrusion of continuous thermoplastic sheath through a die and introducing a monomer of a thermosetting polymer into the sheath during extrusion of the continuous sheath, the monomer being a liquid which cannot be shaped to a self-supporting object, **characterized in that** the monomer is injected into the sheath immediately beyond the plane of the die.

3. Process according to claim 2, **characterized in that** the monomer is polymerized to the thermosetting polymer in the sheath.

4. Process according to claim 3, **characterized in that** the polymerization is effected by UV-radiation.

5. Process according to any one of the claims 2-4, **characterized in that** the sheath consists of an amorphous polymer.

6. Process according to any one of the claims 3-5, **characterized in that** the polymerization is effected immediately after the injection and in one continuous run with it.

7. Process according to any one of the claims 1-6, **characterized in that** the object is stretched prior to the polymerization of the monomer.

8. Process according to any one of the claims 1-7, **characterized in that** the sheath is formed by melt extrusion.

9. Process according to any one of the claims 1-8, **characterized in that** the object is a fibre of the centric cover-core type.

10. Process according to claim 9, **characterized in that** the fibre is a light-transmitting fibre.

## Patentansprüche

1. Verfahren zur Herstellung eines kontinuierlichen Gegenstandes, welches die Extrusion eines kontinuierlichen thermoplastischen Mantels durch eine Form und das Einführen eines Monomers eines heißerhärtenden Polymers in den Mantel in der Ebene der Form während der Extrusion des kontinuierlichen Mantels umfasst, wobei das Monomer, welches eine Flüssigkeit ist, die nicht zu selbsttragenden Gegenständen geformt werden kann, unmittelbar nach der Injektion und in einem kontinuierlichen Lauf mit dieser zum heißerhärtenden Polymer polymerisiert wird, **dadurch gekennzeichnet, dass** ein halbkristallines thermoplastisches Polymer als Mantelmaterial verwendet wird und die Polymerisation durch UV-Strahlung bewirkt wird, bevor der Mantel im Wesentlichen kristallisierte.

2. Verfahren zur Herstellung eines kontinuierlichen Gegenstandes, welches die Extrusion eines kontinuierlichen thermoplastischen Mantels durch eine Form und das Einführen eines Monomers eines heißerhärtenden Polymers in den Mantel während der Extrusion des kontinuierlichen Mantels umfasst, wobei das Monomer eine Flüssigkeit ist, die nicht zu einem selbsttragenden Gegenstand geformt werden kann, **dadurch gekennzeichnet, dass** das Monomer unmittelbar unterhalb der Ebene der Form in den Mantel injiziert wird.

3. Verfahren nach Anspruch 2, **dadurch gekennzeichnet, dass** das Monomer im Mantel zum heißerhärtenden Polymer polymerisiert wird.

4. Verfahren nach Anspruch 3, **dadurch gekennzeichnet, dass** die Polymerisation durch UV-Strahlung bewirkt wird.

5. Verfahren nach einem der Ansprüche 2 bis 4, **dadurch gekennzeichnet, dass** der Mantel aus einem amorphen Polymer besteht.

6. Verfahren nach einem der Ansprüche 3 bis 5, **dadurch gekennzeichnet, dass** die Polymerisation unmittelbar nach der Injektion und in einem kontinuierlichen Lauf mit dieser bewirkt wird.

7. Verfahren nach einem der Ansprüche 1 bis 6, **dadurch gekennzeichnet, dass** der Gegenstand vor der Polymerisation des Monomers verstreckt wird.

8. Verfahren nach einem der Ansprüche 1 bis 7, **dadurch gekennzeichnet, dass** der Mantel durch Schmelzextrusion gebildet wird.

9. Verfahren nach einem der Ansprüche 1 bis 8, **dadurch gekennzeichnet, dass** der Gegenstand eine Faser vom Typ mit zentrischer Umhüllung und Kern ist.

10. Verfahren nach Anspruch 9, **dadurch gekennzeichnet, dass** die Faser eine Lichtleitfaser ist.

## Revendications

1. Procédé de production d'un objet continu qui comprend l'extrusion d'une gaine continue de matière thermoplastique à travers une filière et l'introduction d'un monomère de polymère thermodurcissable à l'intérieur de la gaine dans le plan de la filière pendant l'extrusion de la gaine continue, le monomère, étant un liquide qui ne peut pas être formé en objets auto-portants, est polymérisé en polymère thermodurcissable immédiatement après l'injection et en une opération continue avec celle-ci, **caractérisé en ce qu'**un polymère thermoplastique semi-cristallin est utilisé en tant que matière de gaine et la polymérisation est effectuée à l'aide de rayonnement UV avant que la gaine n'ait sensiblement cristallisé.

2. Procédé pour la production d'un objet continu comprenant l'extrusion d'une gaine continue de matière thermoplastique à travers une filière et l'introduction d'un monomère de polymère thermodurcissable à l'intérieur de la gaine pendant l'extrusion de la gaine continue, le monomère étant un liquide qui ne peut pas être formé en objet autoportant, **caractérisé en ce que** le monomère est injecté à l'intérieur de la gaine immédiatement derrière le plan de la filière.

3. Procédé selon la revendication 2, **caractérisé en ce que** le monomère est polymérisé en polymère thermodurcissable dans la gaine.

4. Procédé selon la revendication 3, **caractérisé en ce que** la polymérisation est effectuée à l'aide de rayonnement UV.

5. Procédé selon l'une quelconque des revendications 2 à 4, **caractérisé en ce que** la gaine est en polymère amorphe.

6. Procédé selon l'une quelconque des revendications 3 à 5, **caractérisé en ce que** la polymérisation est effectuée immédiatement après l'injection et en une opération continue avec celle-ci.

7. Procédé selon l'une quelconque des revendications 1 à 6, **caractérisé en ce que** l'objet est étiré avant la polymérisation du monomère,

8. Procédé selon l'une quelconque des revendications 1 à 7, **caractérisé en ce que** la gaine est formée par extrusion de masse fondue.

9. Procédé selon l'une quelconque des revendications 1 à 8, **caractérisé en ce que** l'objet est une fibre du type couverture-coeur centrés.

10. Procédé selon la revendication 9, **caractérisé en ce que** la fibre est une fibre transmettant la lumière.
